# DEMANDE DE BREVET EUROPEEN

(11) **EP 0 988 818 A2**
(43) Date de publication de la demande: **29.03.2000**
(21) Numéro de dépôt: 99402305.9
(22) Date de dépôt: 21.09.1999
(51) Int. Cl.: A47J 19/02, A47J 43/25

(54) **Accessoire de centrifugation pour appareil ménager de préparation culinaire**

(30) Priorité: 21.09.1998 FR 9811780
(71) Demandeur: Moulinex S.A., 14123 Cormelles Le Royal (FR)
(72) Inventeur: Morin, Gilles, 14930 Vieux (FR)
(74) Mandataire: Busquets, Jean-Pierre

(57) **Abrégé**

L'invention concerne un accessoire 1 d'extraction de liquide de produits alimentaires comportant:
- un bol 2 qui présente une cloison périphérique extérieure 6 et une cloison périphérique intérieure 8 définissant entre elles un réservoir périphérique 9, et une rigole 16 conduisant vers un bec de versage 7;
- un disque de râpage 17 solidaire d'un tamis tronconique 19 de sorte que, lors du fonctionnement de l'appareil, le liquide traverse le tamis 19 et soit dirigé vers la rigole 16 et les matières solides soient évacuées vers le réservoir périphérique 9.

Suivant l'invention, la cloison intérieure 8 du bol 2 présente au moins une ouverture 26 destinée à permettre le passage de liquide du réservoir périphérique 9 vers la rigole 16.

## Description

L'invention se rapporte à un accessoire d'appareil ménager de préparation culinaire, destiné à l'extraction de liquide de produits alimentaires, en particulier l'extraction de jus de fruits ou de légumes.

Les accessoires connus de ce type sont généralement montés sur une embase qui contient un moteur imprimant un mouvement rotatif à un arbre moteur, et comportent:
- un bol qui présente une cloison périphérique extérieure et une cloison périphérique intérieure définissant entre elles un réservoir périphérique, un fût à creux axial dans lequel est monté rotatif un ensemble de transmission présentant un organe d'entrée accouplable à l'arbre moteur et un organe de sortie, et une rigole conduisant vers un bec de versage, située dans la partie inférieure du bol, entre le fût à creux axial et la cloison intérieure;
- un disque de râpage accouplable à l'organe de sortie de façon à être entraîné en rotation avec l'arbre moteur, le disque étant solidaire d'un tamis tronconique dont la petite base coïncide avec la circonférence du disque et la grande base coïncide sensiblement avec le bord supérieur de la cloison intérieure du bol, de sorte que, lors du fonctionnement de l'appareil, le liquide traverse le tamis et soit dirigé vers la rigole et les matières solides soient évacuées vers le réservoir périphérique.

Les appareils utilisant ce genre d'accessoires procurent une grande simplicité d'utilisation et une bonne efficacité pour de nombreux produits usuels; il résulte cependant de l'utilisation de tels appareils, un rendement peu satisfaisant lors du traitement de certains produits, en particulier de fruits ou de légumes relativement secs, c'est-à-dire une quantité de liquide récupérée faible en rapport de la masse de produit traité.

On a constaté qu'une quantité relativement importante de liquide était encore contenue dans les matières solides, telles que la pulpe, refoulées du dispositif rotatif vers le réservoir périphérique du bol, lesquelles matières sont en général jetées par l'utilisateur sans traitement supplémentaire.

L'invention se propose donc d'accroître le rendement de l'appareil, sans intervention supplémentaire de l'utilisateur, à savoir de récupérer une partie du liquide encore contenu dans la pulpe et de la diriger vers le bec de versage.

Ce but est atteint par l'invention du fait que la cloison intérieure du bol présente au moins une ouverture destinée à permettre le passage de liquide du réservoir périphérique vers la rigole.

Grâce à cette disposition et à la légère dépression créée par la rotation du disque et du tamis, le liquide contenu dans la pulpe arrivée dans le réservoir est aspiré vers la rigole.

D'autres caractéristiques et avantages de l'invention apparaîtront dans la description détaillée qui va suivre, donnée à titre d'exemple non limitatif, en référence aux dessins annexés dans lesquels:
- la figure 1 est une vue éclatée en perspective d'un accessoire selon l'invention;
- la figure 2 est une autre vue en perspective de l'accessoire selon la figure 1;
- la figure 3 est une coupe partielle dans le plan de symétrie d' un accessoire selon l'invention.

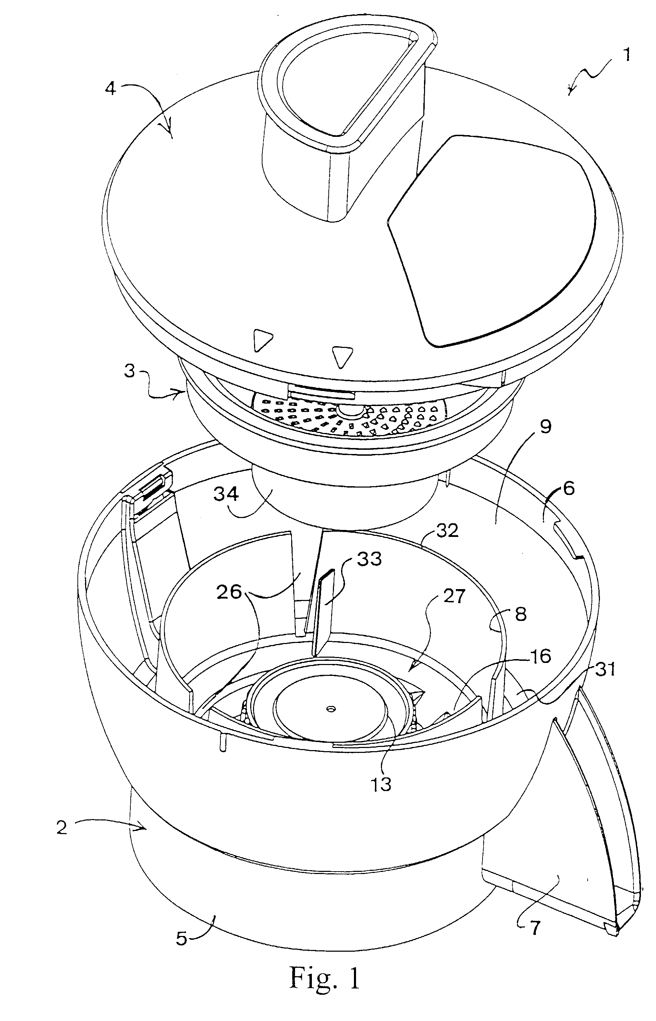

A la figure 1, on a représenté en perspective un accessoire 1 suivant l'invention, destiné à être monté sur une embase -non représentée- qui comporte un moteur électrique imprimant un mouvement rotatif à un arbre moteur, du type arbre crénelé, et des organes de commande d'alimentation électrique et de vitesse du moteur.

Cet accessoire 1 est constitué d'un bol 2, d'un panier de râpage et de filtrage 3, et d'un couvercle 4.

Le bol 2 est conçu pour s'emboîter sur l'embase par sa partie inférieure 5, et présente une cloison périphérique extérieure 6 sur laquelle est formé, tourné vers l'extérieur, un bec de versage 7, une cloison périphérique intérieure 8 de même axe de révolution, les deux cloisons 7, 8 définissant entre elles un réservoir périphérique 9 de réception des matières solides.

Le bol 2 comporte en outre un fût à creux axial 10 fixe par rapport aux cloisons 7, 8 , dans lequel est monté rotatif un ensemble de transmission 11 présentant un organe d'entrée 12, du type arbre creux crénelé, accouplable par emmanchement à l'arbre moteur et un organe de sortie 13, également du type arbre crénelé, lié en rotation à l'organe d'entrée 12 par l'intermédiaire d'un axe 14 monté dans le fût 10, libre en rotation par rapport à ce dernier, au moyen d'un palier de roulement 15; et enfin, une rigole 16 de réception du liquide conduisant vers le bec de versage 7, située dans la partie inférieure du bol 2, entre le fût à creux axial 10 et la cloison intérieure 8.

Le panier de râpage et de filtrage 3 est constitué d'un disque de râpage 17, solidaire d'un arbre creux crénelé 18 complémentaire de l'organe de sortie 13, de façon à être entraîné en rotation avec l'arbre moteur, et d'un tamis tronconique 19 lui-même fixé au disque 17 et/ou à son arbre creux 18.

La petite base du tamis 20, correspondant à la base inférieure, coïncide avec la circonférence du disque 17, et sa grande base 21, correspondant à la base supérieure, coïncide, avec un léger jour, avec le bord supérieur 32 de la cloison intérieure 8 du bol.

Le couvercle 4 est destiné à s'emboîter sur le bol 2 et à rester fixe par rapport à celui-ci lors de l'utilisaton de l'appareil. Il présente un conduit 22 d'introduction des produits alimentaires débouchant au droit du disque de râpage 17, ce conduit 22 étant conformé comme une cheminée dont l'extrémité inférieure 23 affleure les aspérités de râpage 24 formées sur le disque 17, et adapté à recevoir un organe complémentaire 25 prévu pour presser les produits alimentaires contre le disque 17.

Lorsque l'utilisateur introduit des produits alimentaires, tels des morceaux de fruits, dans le conduit 22 de l'appareil en marche, ceux-ci sont préalablement dégradés par le disque 17 en libérant du jus qui est évacué, au travers du tamis 19, vers la rigole 16 et le bec de versage 7; soumise à la force centrifuge due à la rotation à grande vitesse du panier 3, la pulpe transite sur le tamis 19 de l'axe vers l'extérieur, en libérant une certaine quantité de jus à travers le tamis 19, jusqu'à évacuation de la pulpe dans le réservoir périphérique 9.

Ce réservoir 9 est habituellement vidé par l'utilisateur, qui en jette le contenu, en fin d'opération. Il en résulte que le jus contenu dans la pulpe éjectée du panier tournant 3, n'est pas récupéré par l'utilisateur, alors qu'il peut représenter une quantité relativement importante.

Suivant l'invention, la cloison intérieure 8 du bol 2 présente au moins une ouverture 26 destinée à permettre le passage de liquide du réservoir périphérique 9 vers la rigole 16.

Il peut, par exemple, être prévu de répartir une série d'ouvertures 26 sur toute la périphérie de la cloison intérieure 8.

La rotation à grande vitesse du panier de râpage et de filtrage 3 entraîne une certaine quantité d'air en un mouvement tourbillonnaire, dans le volume intérieur 27 délimité par la cloison intérieure 8, générant ainsi un différentiel de pression entre la paroi interne 29 et la paroi externe 28. Le jus encore contenu dans la pulpe éjectée du panier tournant 3 peut s'écouler du réservoir 9 vers la rigole 16, sous l'effet de la légère dépression ainsi obtenue et de sa propre gravité.

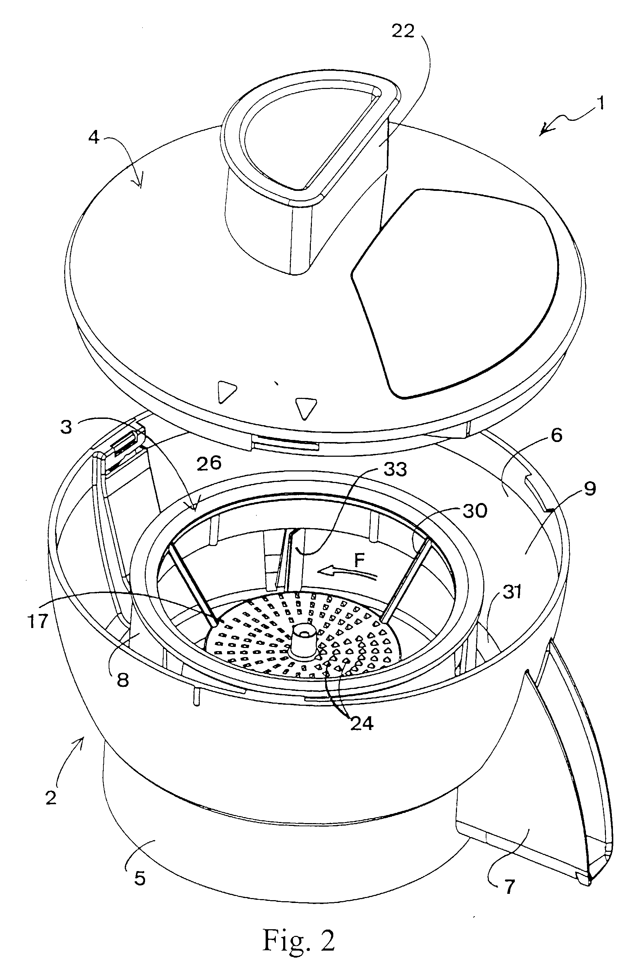

A la figure 2, on a représenté le même accessoire 1, le panier 3 étant monté sur l'organe de sortie 13; le tamis 19 n'est pas représenté, mais occupe la surface tronconique générée par les montants 30, qui relient la base inférieure 20 à la base supérieure 21, autour de l'axe de l'ensemble.

Suivant une caractéristique avantageuse de l'invention, les ouvertures 26 s'étendent à partir du fond 31 du réservoir périphérique 9 jusqu'au bord supérieur 32 de la cloison intérieure 8, et présentent une largeur faible devant sa hauteur, par exemple dans un rapport de 1 à 7 pour une largeur mesurée dans la partie inférieure des ouvertures.

L'on évite ainsi l'introduction de pulpe dans la rigole 16 destinée au passage de liquide, tout en agissant sur toute l'épaisseur de la couche de pulpe contenue dans le réservoir périphérique 9.

Une caractéristique particulièrement avantageuse de l'invention, consiste en ce que la face interne 29 de la cloison intérieure 8 présente, au voisinage amont de chaque ouverture 26, une plaquette 33 inclinée de façon à présenter une incidence positive par rapport au flux d'air F entraîné en rotation par les parties tournantes 3, 13 de l'accessoire 1.

Grâce à la présence de ces plaquettes 33, le flux d'air F tourbillonnaire est défléchi au voisinage des ouvertures 26, créant ainsi une zone de dépression relativement importante entre la plaquette 33 et l'ouverture 26, ce qui favorise nettement l'aspiration du jus résiduel vers la rigole 16.

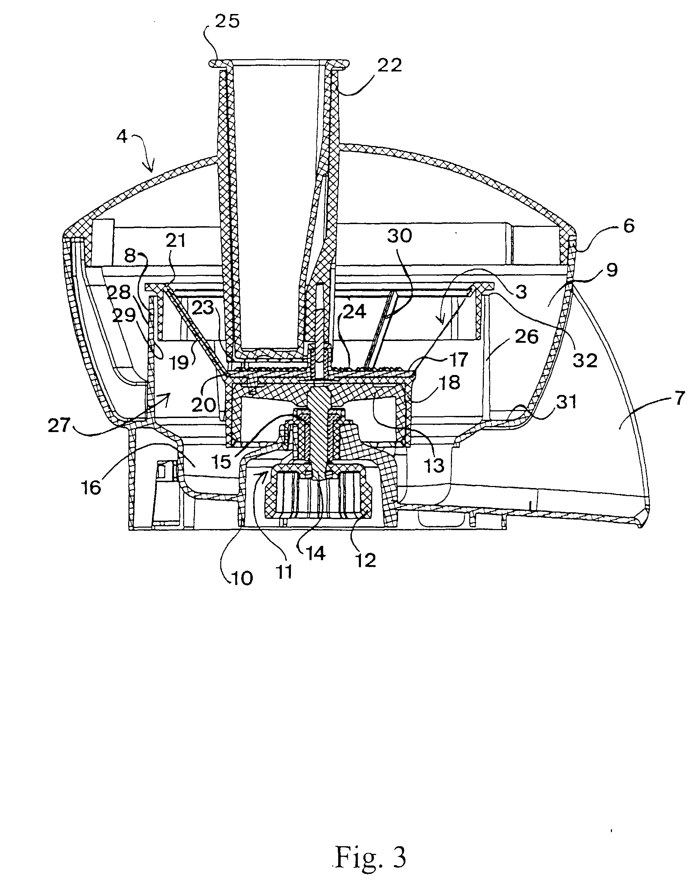

Comme cela apparaît en figure 3, qui est une représentation en coupe de l'accessoire 1 entièrement assemblé, le disque de râpage 17 et le tamis 19 sont solidaires d'une collerette 18 qui s'étend vers le bas à partir de la circonférence du disque 17. Cette collerette 18 constitue, dans le mode de réalisation préféré tel que représenté, l'arbre creux crénelé complémentaire de l'organe de sortie 13. Sa face externe 34 est conformée de façon à engendrer un flux d'air rotatif F et une dépression au voisinage des ouvertures 26, en premier lieu en offrant une surface importante.

L'invention vise également un bol d'accessoire tel que décrit précédemment, ainsi que des appareils ménagers susceptibles d'utiliser un tel accessoire, en particulier une centrifugeuse. Ces appareils peuvent également être un robot ménager.

## Revendications

1. Accessoire (1) d'extraction de liquide de produits alimentaires destiné à être monté sur une embase qui contient un moteur imprimant un mouvement rotatif à un arbre moteur, cet accessoire (1) comportant:
- un bol (2) qui présente une cloison périphérique extérieure (6) et une cloison périphérique intérieure (8) définissant entre elles un réservoir périphérique (9), un fût à creux axial (10) dans lequel est monté rotatif un ensemble de transmission (11) présentant un organe d'entrée (12) accouplable à l'arbre moteur et un organe de sortie (13), et une rigole (16) conduisant vers un bec de versage (7), située dans la partie inférieure du bol (2), entre le fût à creux axial (10) et la cloison intérieure (8);
- un disque de râpage (17) accouplable à l'organe de sortie (13) de façon à être entraîné en rotation avec l'arbre moteur, le disque (17) étant solidaire d'un tamis tronconique (19) dont la petite base (20) coïncide avec la circonférence du disque (17) et la grande base (21) coïncide sensiblement avec le bord supérieur (32) de la cloison intérieure (8) du bol (2), de sorte que, lors du fonctionnement de l'appareil, le liquide traverse le tamis (19) et soit dirigé vers la rigole (16) et les matières solides soient évacuées vers le réservoir périphérique (9);
**caractérisé en ce que** la cloison intérieure (8) du bol (2) présente au moins une ouverture (26) destinée à permettre le passage de liquide du réservoir périphérique (9) vers la rigole (16).

2. Accessoire selon la revendication 1,
**caractérisé en ce que** chaque ouverture (26) s'étend à partir du fond (31) du réservoir périphérique (9) jusqu'au bord supérieur (32) de la cloison intérieure (8), et présente une largeur faible devant sa hauteur.

3. Accessoire selon la revendication 1 ou 2,
**caractérisé en ce que** la face interne (29) de la cloison intérieure (8) présente, au voisinage amont de chaque ouverture (26), une plaquette (33) inclinée de façon à présenter une incidence positive par rapport au flux d'air (F) entraîné en rotation par les parties tournantes (3, 13) de l'acces-soire (1).

4. Accessoire selon l'une quelconque des revendications 1 à 3,
**caractérisé en ce que** le disque de râpage (17) et le tamis (19) sont solidaires d'une collerette (18) qui s'étend vers le bas à partir de la circonférence du disque (17).

5. Bol d'acccessoire selon l'une quelconque des revendications 1 à 4.

6. Centrifugeuse comportant un accessoire selon l'une quelconque des revendications 1 à 4.

7. Robot ménager comportant un accessoire selon l'une quelconque des revendications 1 à 4.
